# EUROPEAN PATENT APPLICATION

(11) **EP 1 661 685 A1**
(43) Date of publication of application: **31.05.2006**
(21) Application number: 04771955.4
(22) Date of filing: 20.08.2004
(51) Int. Cl.: B29C 45/77, B29C 45/70

(54) **MOLDING METHOD, MOLDING DIE, MOLDED PRODUCT, AND MOLDING MACHINE**

(30) Priority: 03.09.2003 JP 2003311338
(71) Applicant: SUMITOMO HEAVY INDUSTRIES, LTD., Shinagawa-ku, Tokyo 141-8686 (JP)
(72) Inventor: TAKIGAWA, Naoki, Sumitomo Heavy Industries, Ltd., Chiba-shi, Chiba 263-0001 (JP)
(74) Representative: Geyer, Ulrich F.
(86) International application number: PCT/JP2004/011994
(87) International publication number: WO 2005/023513

(57) **Abstract**

An object is to provide a molding method in which quantities of a molding material charged in the cavities can be appropriately controlled, whereby a plurality of molded products exhibiting high quality can be simultaneously produced in a one-shot molding process, as well as a mold for molding for use in the same, a molded product obtained by the same, and a molding machine for implementing the same. Before a mold closing step of a mold apparatus is completed, charging of a molding material into a plurality of cavities of the mold apparatus is started; before the mold closing step is completed, charging of the molding material is completed; and after the mold closing step is completed, a mold clamping step of the mold apparatus is performed, wherein molded products are produced while quantities of the molding material charged in the cavities are controlled.

## Description

### TECHNICAL FIELD

The present invention relates to a molding method, a mold for molding, a molded product, and a molding machine.

### BACKGROUND ART

Conventionally, in a resin molding machine, such as an injection molding machine, a resin that is melted in a heating cylinder through application of heat is injected under high pressure into a cavity of a mold apparatus, and the molten resin is cooled and solidified within the cavity, thereby producing a molded product. To perform such molding, the mold apparatus includes a stationary mold and a movable mold. A mold-clamping apparatus advances or retreats the movable mold so as to bring the movable mold into contact with or move the movable mold away from the stationary mold, thereby performing mold opening/closing; i.e., mold closing, mold clamping, and mold opening (Refer to, for example, Japanese Patent Application Laid-Open (kokai) No. H06-293043).

In order to produce, in a short time, a molded product having a shape resembling that of a three-dimensional, deep-bottomed, concave container having a thin side wall, the inventors of the present invention have proposed a molding method including starting, before completion of a mold closing step of a mold apparatus, charging of resin into a cavity of the mold apparatus; charging the resin into the cavity in a predetermined amount by means of controlling the position of a screw of an injection apparatus; completing, before completion of the mold closing step, the charging of the resin in the predetermined amount; and performing, after completion of the mold closing step, a mold clamping step of the mold apparatus so as to produce a molded product.

Even in the case where the charging speed for the molten resin cannot be increased, the proposed method can shorten the molding time of one shot, so that the throughput of the molding machine can be enhanced. Since the molten resin is compressed in the mold clamping step, not only does the molten resin reach the entire region of the cavity, but also the internal pressure distribution within the cavity becomes uniform, thereby improving the molecular orientation of the resin, enhancing the performance of transfer from the surface of the mold, preventing sinkage of the resin, reducing residual stress, and preventing deformation.

### DISCLOSURE OF THE INVENTION

### PROBLEMS TO BE SOLVED BY THE INVENTION

However, the conventional molding method has failed to sufficiently consider the use of a so-called multicavity mold for molding, which allows the simultaneous production of a plurality of molded products in a one-shot molding process.

Generally, in the case where molding, such as injection molding, is to be performed by use of a multicavity mold for molding, a molten resin to be charged must be distributed evenly among a plurality of cavities formed in the multicavity mold for molding. Particularly, in the case where a resin flow path, such as a sprue, through which ejected molten resin flows is a hot runner, which is heated by a heating unit, even distribution of molten resin among the cavities is difficult. As a result, in some cases, the one-shot molding process mixedly involves cavities accompanied by occurrence of burrs caused by leakage of excess molten resin and cavities accompanied by short shot.

An object of the present invention is to solve the above-mentioned conventional problems and to provide a molding method in which gate pins for opening/closing corresponding gate holes of cavities are controlled so as to appropriately control quantities of a molding material to be charged into the cavities, whereby a plurality of molded products exhibiting high quality can be simultaneously produced in a one-shot molding process, as well as a mold for molding for use in the same, a molded product obtained by the same, and a molding machine for implementing the same.

### MEANS FOR SOLVING THE PROBLEMS

To achieve the above object, in a molding method of the present invention, before completion of a mold closing step of a mold apparatus, charging of a molding material into a plurality of cavities of the mold apparatus is started; before completion of the mold closing step, charging of the molding material is completed; and after completion of the mold closing step, a mold clamping step of the mold apparatus is performed, wherein molded products are produced while quantities of the molding material charged in the cavities are controlled.

In another molding method of the present invention, charging of a molding material into a plurality of cavities of a mold apparatus is started in a state in which plungers, which advance into and retreat from the corresponding cavities, are located at respective retreated positions; before completion of a mold closing step, charging of the molding material is completed; after completion of the mold closing step, a mold clamping step of the mold apparatus is performed; and the plungers are advanced into the corresponding cavities so as to produce molded products while quantities of the molding material charged in the cavities are controlled.

In a further molding method of the present invention, the quantities of the molding material charged in the cavities are controlled by means of gate pins for closing gate holes of the corresponding cavities.

In a still another molding method of the present invention, the gate pins undergo mutually independent pressure control or mutually independent speed control.

A mold for molding of the present invention comprises a stationary mold having a parting face; a movable mold having a parting face to be pressed, in a close contact condition, against the parting face of the stationary mold, and advancing toward the stationary mold; a plurality of cavities formed between the stationary mold and the movable mold; insert rings each having a base portion and a projecting portion, the base portions being fixed to either of the parting faces around the corresponding cavities; annular grooves formed on the other parting face around the corresponding cavities and adapted to receive the projecting portions of the corresponding insert rings; gate pins for closing gate holes of the corresponding cavities; and a drive apparatus for controlling operations of the gate pins in a mutually independent manner so as to control quantities of a molding material charged in the cavities.

In another mold for molding of the present invention, the drive apparatus controls operations of the gate pins in a mutually independent manner such that a pressure of the molding material charged in each cavity becomes less than a predetermined value.

In a further mold for molding of the present invention, each of the gate holes establishes communication between the corresponding cavity and a molding-material flow path equipped with a heating unit.

A molded product of the present invention is produced by a molding method according to an embodiment of the present invention.

Another molded product of the present invention is a set of molded products different in shape and capable of being mutually combined.

A molding machine of the present invention produces a molded product by use of a mold apparatus. The mold apparatus comprises a stationary mold having a parting face; a movable mold having a parting face to be pressed, in a close contact condition, against the parting face of the stationary mold, and advancing toward the stationary mold; a plurality of cavities formed between the stationary mold and the movable mold; insert rings each having a base portion and a projecting portion, the base portions being fixed to either of the parting faces around the corresponding cavities; annular grooves formed on the other parting face around the corresponding cavities and adapted to receive the projecting portions of the corresponding insert rings; gate pins for closing gate holes of the corresponding cavities; and a drive apparatus for controlling operations of the gate pins in a mutually independent manner so as to control quantities of a molding material charged in the cavities.

In another molding machine of the present invention, the gate pins undergo mutually independent pressure control or mutually independent speed control.

### EFFECTS OF THE INVENTION

According to the present invention, the gate pins for opening/closing the gate holes of the corresponding cavities are controlled. Thus, quantities of a molding material to be charged into the cavities can be controlled, whereby a plurality of molded products exhibiting high quality can be simultaneously produced in a one-shot molding process.

### BRIEF DESCRIPTION OF THE DRAWINGS

[FIG. 1] Sectional view showing the peripheral configuration of one cavity of a mold apparatus according to a first embodiment of the present invention.
[FIG. 2] Schematic view showing the configuration of an injection molding machine according to the first embodiment of the present invention.
[FIG. 3] Perspective view of a molded product according to the first embodiment of the present invention.
[FIG. 4] Sectional view of the molded product according to the first embodiment of the present invention.
[FIG. 5] Sectional view of the mold apparatus according to the first embodiment of the present invention, showing a state in which mold closing is to be started.
[FIG. 6] First sectional view of the mold apparatus according to the first embodiment of the present invention, showing a state in which a molten resin is charged.
[FIG. 7] Second sectional view of the mold apparatus according to the first embodiment of the present invention, showing a state in which the molten resin is charged.
[FIG. 8] Sectional view of the mold apparatus according to the first embodiment of the present invention, showing a mold-closed condition.
[FIG. 9] Sectional view of the periphery of a gate hole according to the first embodiment of the present invention, showing a state in which a valve gate pin opens the gate hole. [FIG. 10] Views showing an operation in the mold closing step of the mold apparatus according to the first embodiment of the present invention.
[FIG. 11] Sectional view of the mold apparatus according to the first embodiment of the present invention, showing a mold-opened condition.
[FIG. 12] First sectional view of the mold apparatus according to the first embodiment of the present invention, showing a state in which a molded product is ejected.
[FIG. 13] Second sectional view of the mold apparatus according to the first embodiment of the present invention, showing a state in which a molded product is ejected.
[FIG. 14] Views showing a first molded product according to a second embodiment of the present invention.
[FIG. 15] Views showing a second molded product according to the second embodiment of the present invention.
[FIG. 16] Sectional view of an assembly of the first and second molded products according to the second embodiment of the present invention.
[FIG. 17] Enlarged view showing an essential portion F of the assembly of the first and second molded products according to the second embodiment of the present invention.
[FIG. 18] Sectional view showing the peripheral configuration of one cavity of a mold apparatus according to a third embodiment of the present invention.

### DESCRIPTION OF REFERENCE NUMERALS

- 17:: insert ring
- 18:: insert-ring-receiving groove
- 19:: plunger
- 23:: movable mold
- 24:: stationary mold
- 28:: resin flow path
- 37:: cavity
- 38:: valve gate pin
- 39:: gate hole
- 41:: molded product
- 42:: molten resin
- 43:: heating unit
- 51:: first molded product
- 52:: second molded product
- 73:: pneumatic cylinder unit

### BEST MODE FOR CARRYING OUT THE INVENTION

Embodiments of the present invention will next be described with reference to the drawings. A molding method of the present invention can be applied to various kinds of apparatus and applications. However, for convenience of description, the embodiments will be described while mentioning applications to an injection molding machine.

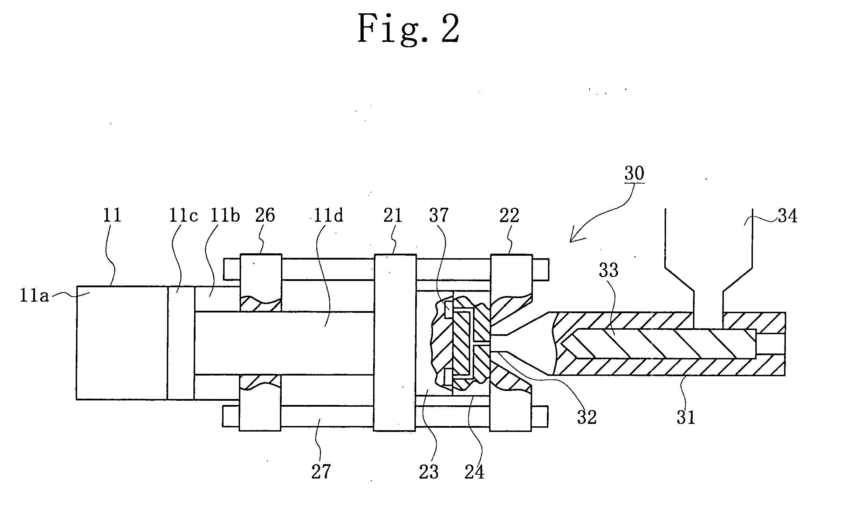

FIG. 2 is a schematic view showing the configuration of an injection molding machine according to a first embodiment of the present invention.

In the drawing, reference numeral 30 denotes an injection apparatus. The injection apparatus 30 includes a heating cylinder 31; an injection nozzle 32 disposed at the front end of the heating cylinder 31; a screw 33 disposed within the heating cylinder 31; and a material feed hopper 34 attached to the heating cylinder 31. An unillustrated drive apparatus rotates, advances (moves leftward), and retreats (moves rightward) the screw 33 in the interior of the heating cylinder 31.

In the injection molding machine, resin, which serves as a molding material, is melted within the heating cylinder 31 through application of heat; the molten resin is injected under high pressure into a cavity 37 of a mold apparatus; and the resin contained in the cavity 37 is cooled and solidified, thereby producing a molded product. Notably, the present embodiment employs a plurality of the cavities 37. The number of the cavities 37 is not particularly limited. Herein, for convenience of description, the number of the cavities 37 is two. In this case, an unillustrated control unit controls the advancement and retreat of the screw 33. The present embodiment does not employ complicated pressure control, in which the advancement and retreat of the screw 33 is controlled such that the pressure of the resin to be injected or the pressure of the resin to be charged into the cavity 37; i.e., a charging pressure for the resin, becomes a predetermined value. Instead, the present embodiment employs simple position control, in which the position of the screw 33, which advances and retreats irrespective of a charging pressure for the resin, is controlled. This allows the resin to be charged in a predetermined amount into the cavity 37. The predetermined amount corresponds to, for example, about 100% to 150%, preferably about 120%, the volume of the cavity 37 in a mold-closed condition. In place of the position control, a method of controlling a charge time as measured from the start of charging may be employed.

The mold apparatus includes a stationary mold 24 and a movable mold 23 and is configured as follows: a mold-clamping apparatus advances and retreats the movable mold 23 so as to bring the movable mold 23 into contact with and move the movable mold 23 away from the stationary mold 24, whereby the mold apparatus can perform mold opening and closing; i.e., mold closing, mold clamping, and mold opening. The mold-clamping apparatus includes a stationary platen 22 for retaining the stationary mold 24, and a movable platen 21 for retaining the movable mold 23, and is operated by driving a hydraulic cylinder apparatus 11 for advancing and retreating the movable platen 21.

The stationary platen 22, which serves as a stationary mold support apparatus, is disposed in opposition to the injection apparatus 30. The stationary platen 22 is fixed to an unillustrated frame of the injection molding machine. The stationary mold 24 is mounted on a mold-mounting surface of the stationary platen 22. Ends of a plurality of; for example, four, tie bars 27 are fixed to the stationary platen 22.

The movable platen 21, which serves as a movable-mold support apparatus, is disposed in opposition to the stationary platen 22 and in a manner capable of advancing and retreating along the tie bars 27. Further, the movable mold 23 is mounted on the mold-mounting surface of the movable platen 21, the mold-mounting surface being in opposition to the stationary platen 22.

A drive-source support member 26 is attached to the tie bars 27, in opposition to the back surface (left-hand surface in the drawing) of the movable platen 21 and in a positionally adjustable condition. The hydraulic cylinder apparatus 11, which serves as a drive source for the mold-clamping apparatus of the injection molding machine, is attached to the back surface (left-hand surface in the drawing) of the drive-source support member 26. In this case, the hydraulic cylinder apparatus 11 includes a head-side hydraulic chamber 11a; a rod-side hydraulic chamber 11b; a piston 11c; and a rod 11d. The head-side hydraulic chamber 11a is disposed on the piston 11c, on a side opposite the rod 11d, and the rod-side hydraulic chamber 11b is disposed on the piston 11c, on a side toward the rod 11d. The rod 11d is inserted into a through hole formed in the drive-source support member 26, and an end portion thereof is connected to the movable platen 21.

In the present embodiment, no limitation is imposed on the type of the mold-clamping apparatus and on the type of the drive source for the mold-clamping apparatus. For example, the mold-clamping apparatus may be of a straight-hydraulic type as shown in the drawing, of a toggle type that utilizes a toggle link, or a composite type in which a link mechanism and a cylinder apparatus are combined. The drive source may be a hydraulic cylinder apparatus as shown in the drawing, or a combination of an electric motor and a ball screw.

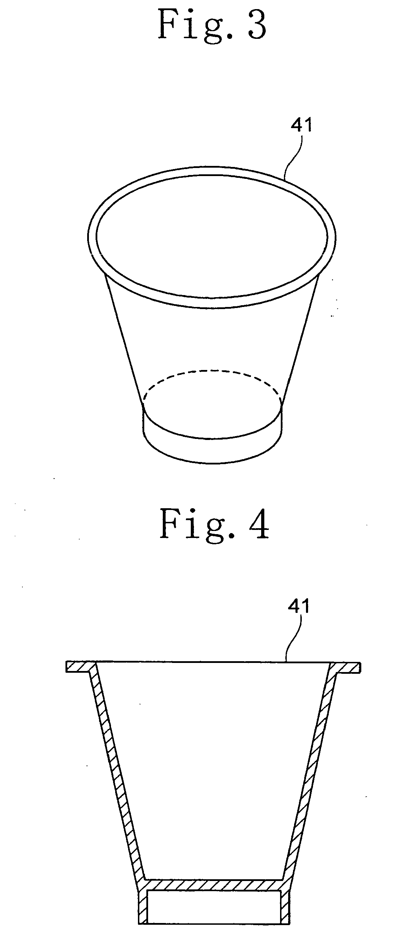

FIG. 3 is a perspective view of a molded product according to the first embodiment of the present invention. FIG. 4 is a sectional view of the molded product according to the first embodiment of the present invention.

In the present embodiment, a molded product to be produced may assume any shape. The molding method, the mold for molding, and the molding machine are characterized in that they can be applied to molding for a molded product 41, which, as shown in FIGS. 3 and 4, has a shape resembling that of a three-dimensional, deep-bottomed, concave container having a thin side wall. Herein, molding for a molded product having a shape resembling that of a three-dimensional, deep-bottomed, concave container having a thin side wall will be described.

Molded products whose shapes resemble that of a three-dimensional, deep-bottomed, concave container having a thin side wall include containers for foods, such as jelly and pudding; cups; containers; caps of containers; and parisons or preforms for use in blow molding. The molded products may be speaker cones for use in loudspeakers, various kinds of cartridges, flowerpots, and like products of any other kind. Molded products to be produced in the present embodiment have, for example, a depth of 10 mm or more and a side wall thickness of 0.2 mm to 3 mm, usually about 1 mm.

The present embodiment may use any kind of molding material. The molding method, the mold for molding, the molded product, and the molding machine according to the present embodiment are characterized in that the molded product can be produced from a highly viscous resin, which serves as a molding material, in a short time with high accuracy. Therefore, herein, molding for a molded product of a highly viscous resin will be described. The highly viscous resin is a thermoplastic resin having a melt viscosity of 3,600 poise or more, or a melt index of 30 or less, or a number average molecular weight of 24,000 or more. Examples of such a highly viscous resin include PET (polyethylene terephthalate), PC (polycarbonate), PMMA (polymethyl methacrylate), HDPE (high density polyethylene), and AS (styrene/acrylonitrile). Further, the present embodiment may use, as molding materials, environmental low-load-type materials, whose load imposed on the environment is low, such as recyclable materials, readily recyclable materials, reusable materials, readily reusable materials, biodegradable materials to be degraded by microorganisms such as bacteria, and materials rarely containing substances conceivably harmful to the environment, such as chlorine. Examples of environmental low-load-type materials include biodegradable materials, such as biodegradable resins also called biodegradable plastics; vegetable-fiber-containing materials prepared by mixing a material containing vegetable fibers, such as paper, pulp, or wood, with a resin; and earth-rock-containing materials prepared by mixing a material containing natural earth-and-rock, such as earth or talc, with a resin. The environmental low-load-type material may be an appropriate combination of a biodegradable material, a vegetable-fiber-containing material, an earth-rock-containing material, and the like. Preferably, in view of load imposed on the environment, the vegetable-fiber-containing materials and the earth-rock-containing materials have a low resin content; for example, less than 50%. However, they may be of any kind.

Next, the configuration of the mold apparatus will be described in detail. In the present embodiment, the mold apparatus have a plurality of the cavities 37. The cavities 37 have the same peripheral configuration. Therefore, the peripheral configuration of a single cavity 37 will be described.

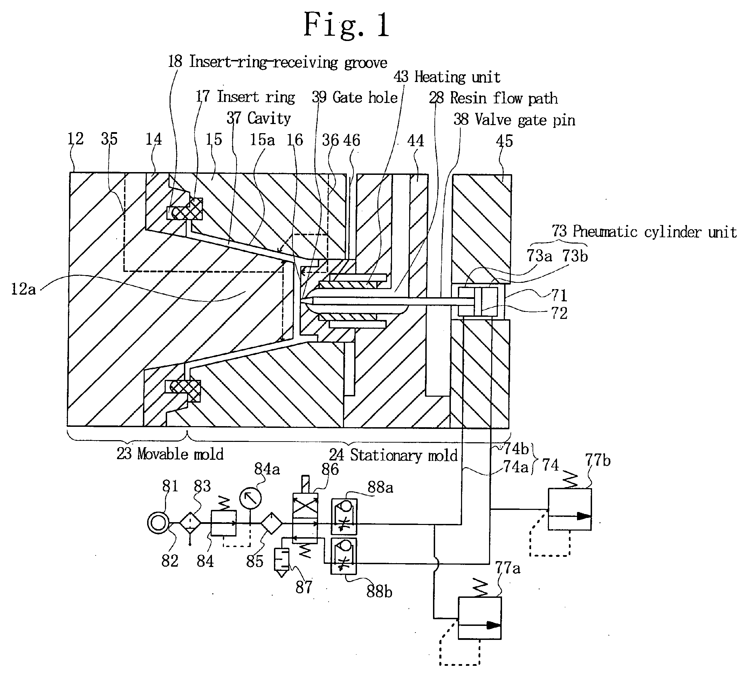

FIG. 1 is a sectional view showing the peripheral configuration of one cavity of a mold apparatus according to the first embodiment of the present invention.

In FIG. 1, reference numeral 12 denotes a mold core of the movable mold 23 mounted on the mold-mounting surface of the movable platen 21, and reference numeral 14 denotes a stripper plate mounted on the mold core 12. Reference numeral 45 denotes a base plate of the stationary mold 24 mounted on the mold-mounting surface of the stationary platen 22, and reference 44 denotes a runner block mounted on the base plate 45. Reference numeral 15 denotes a cavity template of the stationary mold 24 mounted on the runner block 44, and reference numeral 16 denotes a gate block fitted into the cavity template 15. The mold core 12 has a projecting portion 12a for forming the inner side wall and the inner bottom surface of the deep-bottomed, concave molded product 41; the cavity template 15 has a recess portion 15a for forming the outer side wall of the molded product 41, and forms the lower surface of a flange of the molded product 41; the stripper plate 14 forms the upper surface of the flange of the molded product 41; and the gate block 16 forms the outer bottom surface of the molded product 41. As shown in FIG. 1, in the mold-closed condition, the mold core 12, the stripper plate 14, the cavity template 15, and the gate block 16 define the cavity 37 corresponding to the shape of the molded product 41.

A resin flow path 28, which serves as a flow path for a molding material, such as a runner or a sprue, for allowing flow of resin ejected from the injection nozzle 32 disposed at the front end of the heating cylinder 31 is formed in the runner block 44. A gate hole 39 for establishing communication between the interior of the cavity 37 and the resin flow path 28 is formed in the gate block 16. This allows a molten resin ejected from the injection nozzle 32 to be charged into the cavity 37 through the resin flow path 28 and the gate hole 39. The resin flow path 28 is a hot runner having a heating unit 43, such as an electric heater, disposed therearound. Energy for heating is supplied to the heating unit 43 via an energy feed line 46, such as a power line.

A tongue and a groove are respectively formed on the mutually contacting faces of the stripper plate 14 and the cavity template 15; i.e., on the parting faces of the movable mold 23 and the stationary mold 24, so as to form a tongue-and-groove joint. This prevents leakage of the charged, molten resin from the cavity 37 through the clearance between the parting faces with resultant generation of burrs.

Further, an insert ring 17 is removably fixed to the parting face of the cavity template 15 by fixing means, such as bolts or countersunk screws. The insert ring 17 includes a base portion to be fixed to the parting face of the cavity template 15, and a projecting portion projecting toward the parting face of the stripper plate 14, and has a cross section resembling the letter L. Desirably, as shown in FIG. 1, a groove is formed on the parting face of the cavity template 15 so as to receive the base portion of the insert ring 17.

An insert-ring-receiving groove 18, which is an annular groove, is formed on the parting face of the stripper plate 14 such that, as shown in FIG. 1, the projecting portion of the insert ring 17 is fitted thereinto. As in the case of a tongue and a groove formed on the corresponding parting faces of the movable mold 23 and the stationary mold 24, the insert ring 17 and the insert-ring-receiving groove 18 prevent leakage of the charged, molten resin from the cavity 37 through the clearance between the parting faces with resultant generation of burrs.

The above mating structure may be such that the insert ring 17 is fixed to the parting face of the stripper plate 14, while the insert-ring-receiving groove 18 is formed on the parting face of the cavity template 15.

Preferably, the insert ring 17 is formed of a material softer than a material for the stripper plate 14 and the cavity template 15. In this case, in the course of long-term use of the mold apparatus, the stripper plate 14 and the cavity template 15 do not wear, whereas the insert ring 17 wears. Since the insert ring 17 is removably fixed by the fixing means, such as bolts or countersunk screws, the insert ring 17 can be readily replaced.

An ejection flow path 35 functioning as a pressurized-fluid flow path is formed in the mold core 12. The ejection flow path 35 communicates with the cavity 37 at one end thereof and with the outer wall of the mold core 12 at the other end thereof. The other end of the ejection flow path 35 is connected to an unillustrated pressurized-fluid source, such as a compressor or an accumulator, so that a pressurized fluid, such as pressurized air, from the pressurized-fluid source is supplied into the cavity 37. Thus, even when the molded product 41 adheres to the mold core 12 at the time of mold opening, the molded product 41 can be separated from the mold core 12 by supplying the pressurized fluid through the ejection flow path 35.

Also, a ventilation flow path 36, which functions as a pressurized-fluid flow path as in the case of the ejection flow path 35, is formed in the cavity template 15 and the gate block 16. A pressurized fluid, such as pressurized air, from the pressurized-fluid source is supplied into the cavity 37 through the ventilation flow path 36. Thus, even when the molded product 41 adheres to the cavity template 15 at the time of mold opening, the molded product 41 can be separated from the cavity template 15 by supplying the pressurized fluid through the ventilation flow path 36.

FIG. 1 shows a state in which a tip end of a valve gate pin 38, which serves as a gate pin, is advanced into the gate hole 39. A base portion of the valve gate pin 38 is attached to a piston 72 of a pneumatic cylinder unit 73, which is attached to the base plate 45 and serves as a drive mechanism. The valve gate pin 38 is moved in the opening-closing direction of the mold apparatus; i.e., in the lateral direction in FIG. 1. Notably, a hydraulic cylinder unit, an electric motor, or the like can be used as the drive mechanism. Herein, description is given while referring to the pneumatic cylinder unit 73 which is operated by means of pressurized air. The pneumatic cylinder unit 73 includes a gate-pin-side pressure chamber 73a and a counter-gate-pin-side pressure chamber 73b, which are located on opposite sides of the piston 72. Pressurized air, which serves as a pressurized fluid, is supplied to the gate-pin-side pressure chamber 73a and the counter-gate-pin-side pressure chamber 73b via a gate-pin-side pipe line 74a and a counter-gate-pin-side pipe line 74b, respectively, thereby operating the pneumatic cylinder unit 73. In collective description of the gate-pin-side pressure chamber 73a and the counter-gate-pin-side pressure chamber 73b and of the gate-pin-side pipe line 74a and the counter-gate-pin-side pipe line 74b, the gate-pin-side pressure chamber 73a and the counter-gate-pin-side pressure chamber 73b are collectively referred to as a pressure chamber 71, and the gate-pin-side pipe line 74a and the counter-gate-pin-side pipe line 74b are collectively referred to as a connection pipe line 74.

The pressurized air is selectively supplied to the gate-pin-side pressure chamber 73a and the counter-gate-pin-side pressure chamber 73b from a pressurized-fluid source 81 having an air compressor, an accumulator, or the like. In this case, the pressurized air having a pressure of 5 kgf/cm² to 40 kgf/cm² and supplied from the pressurized-fluid source 81 is supplied to a direction control valve 86 via a supply pipe line 82. The direction control valve 86 changes over the flow direction to the gate-pin-side pipe line 74a or the counter-gate-pin-side pipe line 74b. In the supply pipe line 82 extending from the pressurized-fluid source 81 to the direction control valve 86, a filter 83, a pressure-regulating valve 84, a pressure gauge 84a attached to the pressure-regulating valve 84, and a lubricator 85 are disposed. A speed control valve 88a and a speed control valve 88b are disposed on the gate-pin-side pipe line 74a and the counter-gate-pin-side pipe line 74b, respectively. A silencer 87 is attached to an exhaust port of the direction control valve 86. The pressurized-fluid source 81 may supply a pressurized fluid other than pressurized air, such as pressurized oil. Further, the pressurized-fluid source 81 may also serve as the pressurized-fluid source for supplying a pressurized fluid to the ejection flow path 35 or the ventilation flow path 36.

In the state shown in FIG. 1, the tip end of the valve gate pin 38 is advanced into the gate hole 39 and closes the gate hole 39, and the pneumatic cylinder unit 73 is in a dwell condition and keeps pressing the valve gate pin 38 toward the gate hole 39 with a predetermined force. The tip end of the valve gate pin 38 is subjected to a force which is induced by the pressure of the resin contained in the cavity 37 and presses the valve gate pin 38 toward the pneumatic cylinder unit 73. A relief valve 77a is connected to the gate-pin-side pipe line 74a and opens when the pressure in the gate-pin-side pressure chamber 73a becomes a predetermined value or higher. A relief valve 77b is connected to the counter-gate-pin-side pipe line 74b and opens when the pressure of the resin contained in the cavity 37 becomes a predetermined allowable value or higher to thereby cause, via the piston 72, the pressure in the counter-gate-pin-side pressure chamber 73b to become a predetermined relief value or higher. As a result, the piston 72 moves so as to move the valve gate pin 38 toward the pneumatic cylinder unit 73, thereby opening the gate hole 39.

In other words, when the pressure of the resin contained in the cavity 37 attains a value equal to or higher than an allowable value, the resin overcomes the force which presses the valve gate pin 38 toward the gate hole 39, thereby moving the valve gate pin 38 toward the pneumatic cylinder unit 73. Thus, the valve gate pin 38 opens the gate hole 39. As a result, the resin leaks into the resin flow path 28 from the cavity 37, so that the pressure of the resin contained in the cavity 37 drops. When the pressure of the resin drops below the allowable value, the force which presses the valve gate pin 38 toward the gate hole 39 overcomes the pressure of the resin. Therefore, the tip end of the valve gate pin 38 again closes the gate hole 39. In this manner, the valve gate pin 38 functions as a constant-pressure valve or a relief valve for maintaining the pressure of the resin contained in the cavity 37 below the allowable value.

Unless the pressure of the resin contained in the cavity 37 attains a value equal to or higher than the predetermined value, the tip end of the valve gate pin 38 maintains such a condition as to be advanced into the gate hole 39 and to close the gate hole 39. Thus, even when the molten resin contained in the cavity 37 is pressurized and compressed, the molten resin does not leak out from the gate hole 39.

Next, the operation of the thus-configured molding machine will be described.

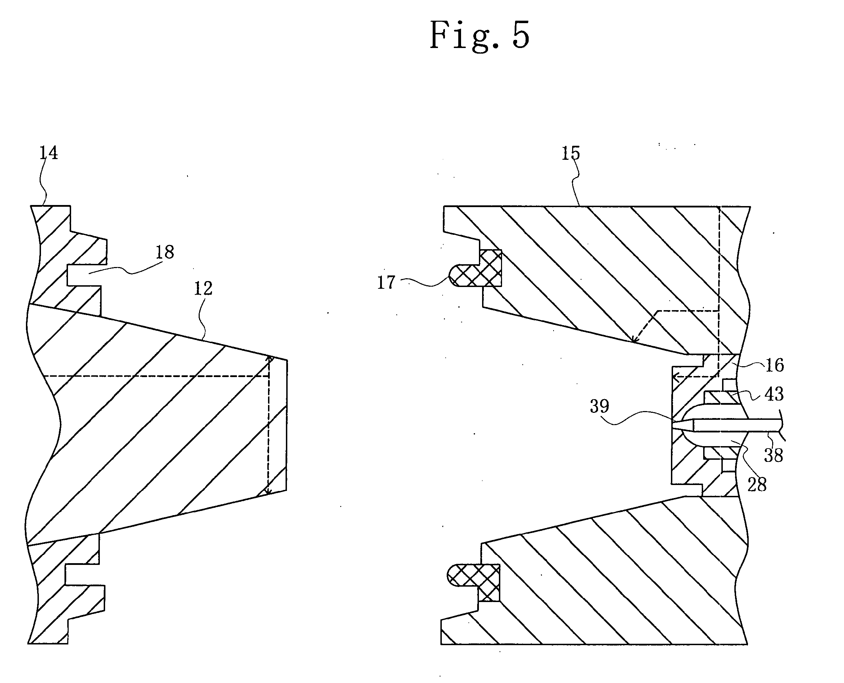

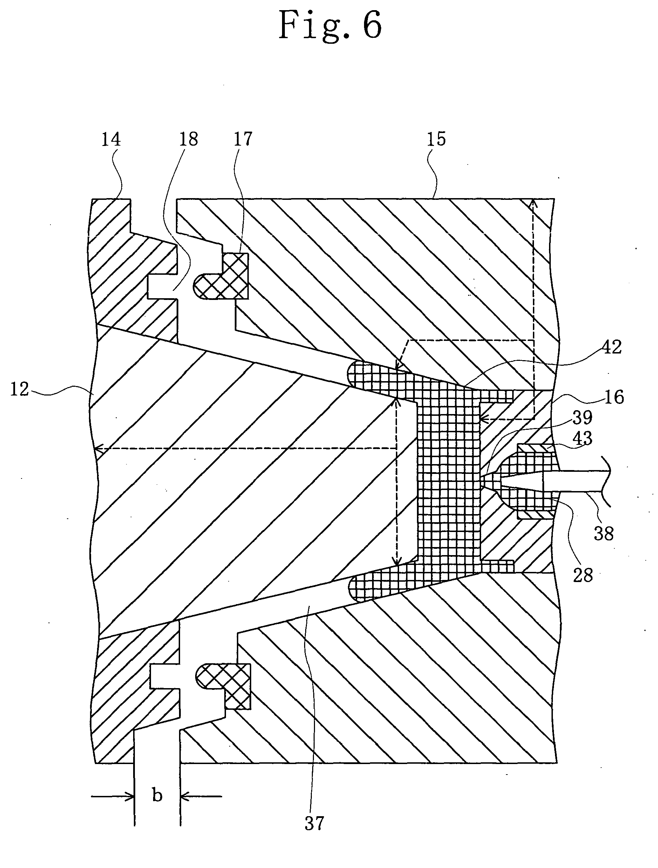

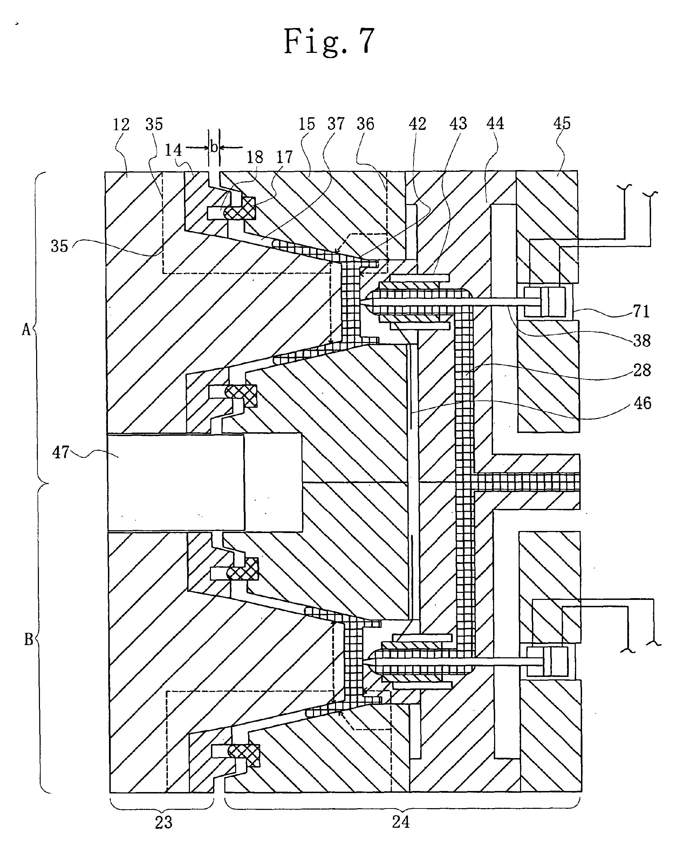

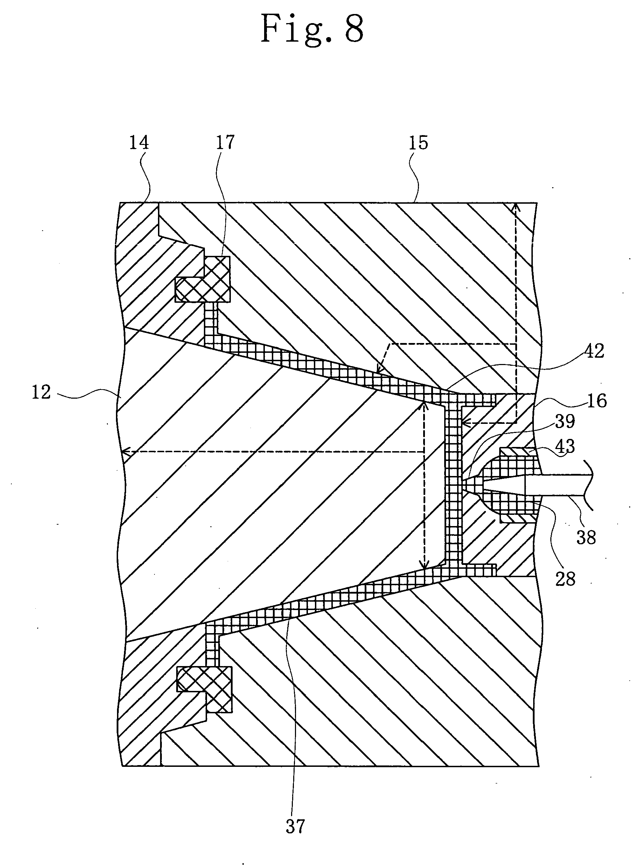

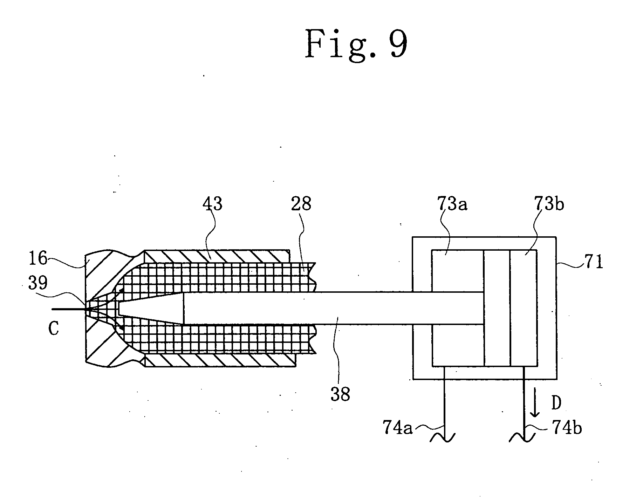

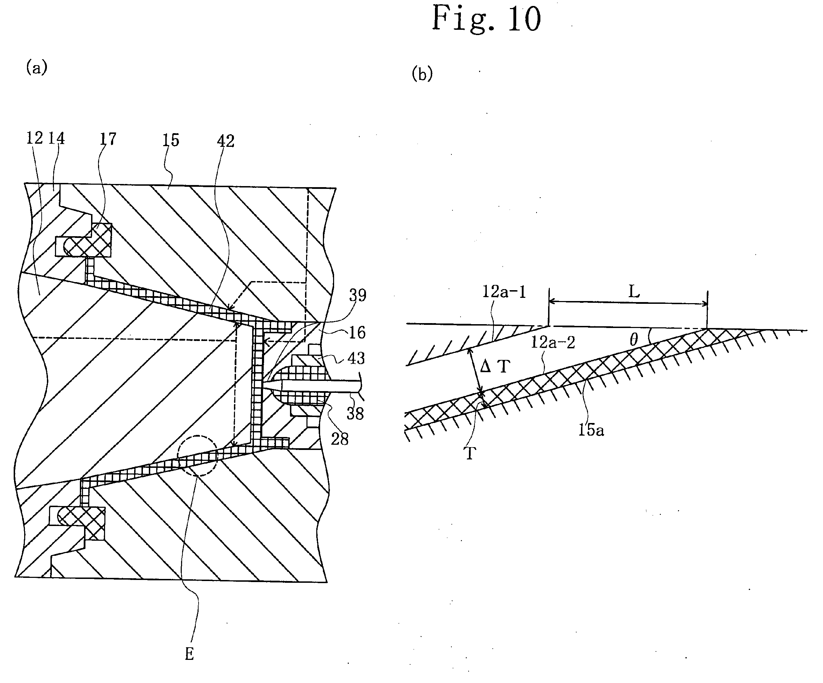

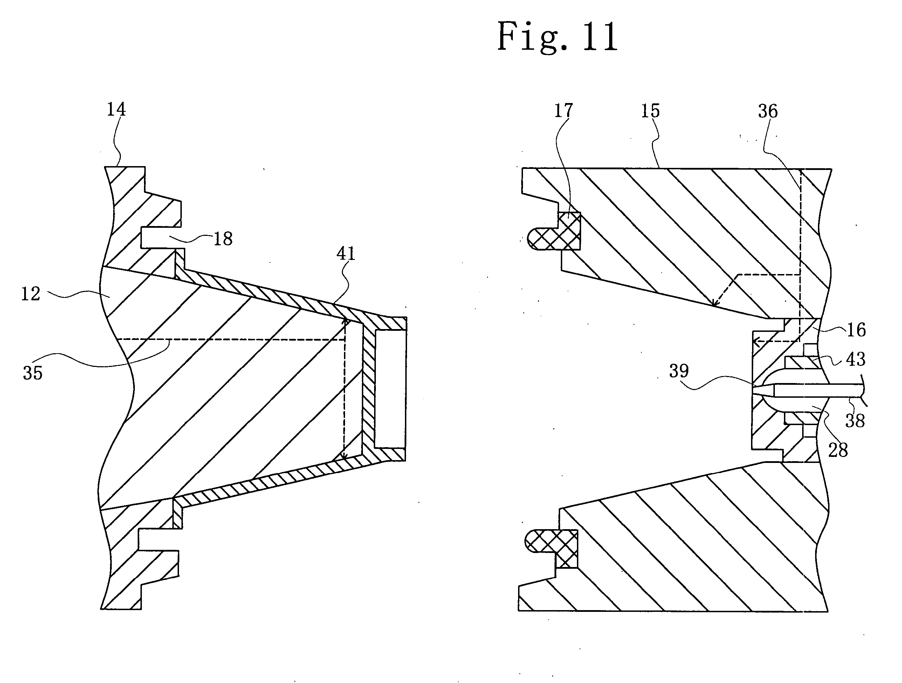

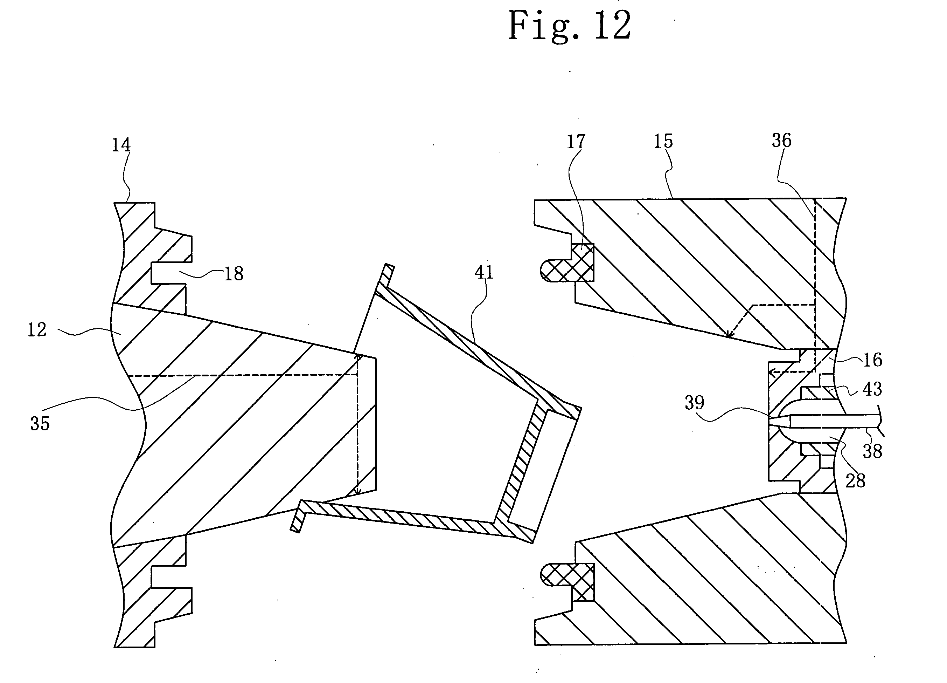

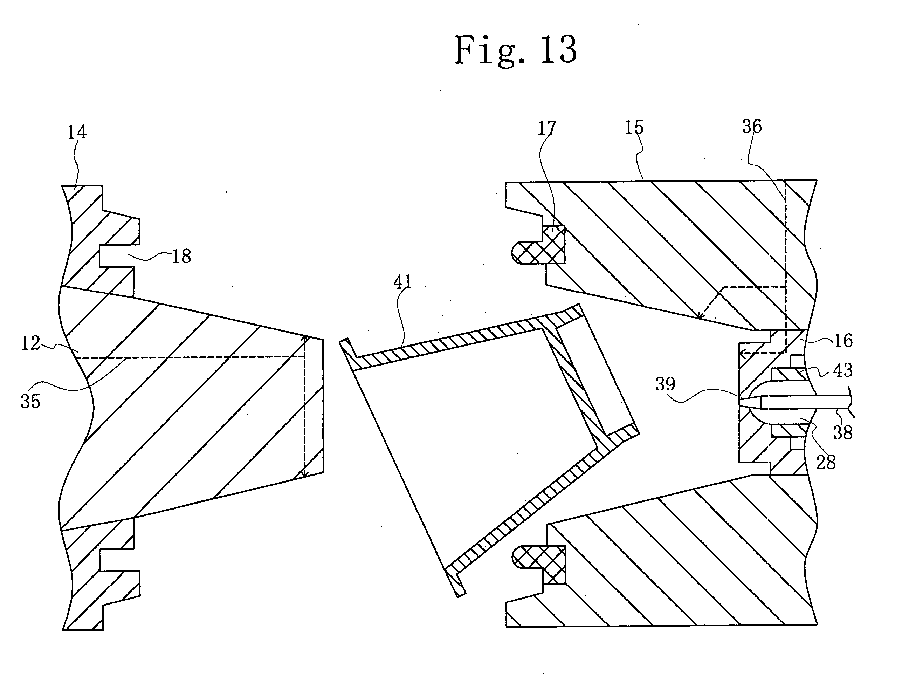

FIG. 5 is a sectional view of the mold apparatus according to the first embodiment of the present invention, showing a state in which mold closing is to be started; FIG. 6 is a first sectional view of the mold apparatus according to the first embodiment of the present invention, showing a state in which a molten resin is charged; FIG. 7 is a second sectional view of the mold apparatus according to the first embodiment of the present invention, showing a state in which the molten resin is charged; FIG. 8 is a sectional view of the mold apparatus according to the first embodiment of the present invention, showing a mold-closed condition; FIG. 9 is a sectional view of the periphery of a gate hole according to the first embodiment of the present invention, showing a state in which a valve gate pin opens the gate hole; FIG. 10 is a couple of views showing an operation in the mold closing step of the mold apparatus according to the first embodiment of the present invention; FIG. 11 is a sectional view of the mold apparatus according to the first embodiment of the present invention, showing a mold-opened condition; FIG. 12 is a first sectional view of the mold apparatus according to the first embodiment of the present invention, showing a state in which a molded product is ejected; and FIG. 13 is a second sectional view of the mold apparatus according to the first embodiment of the present invention, showing a state in which a molded product is ejected.

First, before molding is started, the piston 11c and the rod 11d of the hydraulic cylinder apparatus 11 are in a retreated condition (in a condition moved leftward in FIG. 2). Thus, the mold apparatus is in the mold-opened condition as shown in FIG. 5. Also, the valve gate pin 38 is in a condition such that its tip end is advanced into the gate hole 39, thereby closing the gate hole 39.

Subsequently, when the mold closing step is started, the hydraulic cylinder apparatus 11 is driven, whereby the piston 11c and the rod 11d advance (move rightward in FIG. 2), thereby causing the movable platen 21 to advance. Thus, the movable mold 23 approaches the stationary mold 24. When, as shown in FIG. 6, the clearance between the parting face of the stripper plate 14 and the parting face of the cavity template 15 becomes a dimension b, the hydraulic cylinder apparatus 11 stops, thereby halting the mold closing step. The dimension b is the quantity of compression of resin and is about 3 to 100 times the thickness of the side wall of the molded product 41. The dimension b is usually about 1 mm to 15 mm. The quantity of compression is determined based on the thickness of the side wall of the molded product 41 and the viscosity of a molten resin 42. Desirably, when the wall thickness of the molded product 41 is 1.5 mm to 3.0 mm, the quantity of compression is 3 to 10 times the wall thickness; and when the wall thickness of the molded product 41 is 0.2 mm to 1.5 mm, the quantity of compression is 10 to 100 times the wall thickness.

While, as shown in FIG. 6, the parting face of the stripper plate 14 and the parting face of the cavity template 15 are opened apart from each other, the valve gate pin 38 moves toward the pneumatic cylinder unit 73; i.e., the valve gate pin 38 retreats and opens the gate hole 39. Subsequently, the molten resin 42 ejected from the injection nozzle 32 disposed at the front end of the heating cylinder 31 is charged, through the resin flow path 28, into the cavity 37 between the mold core 12 and the gate block 16, which are in the mold-opened condition. When the molten resin 42 in a predetermined amount is charged into the cavity 37, the valve gate pin 38 advances. The tip end of the valve gate pin 38 advances into the gate hole 39, thereby closing the gate hole 39.

In this case, a bottom portion of the cavity 37 is filled with the molten resin 42, the bottom portion being substantially perpendicular to the opening-closing direction of the mold apparatus. However, a portion of a side wall portion of the cavity 37 located distant from the gate hole 39 is not charged with the molten resin 42, the side wall portion being inclined in relation to the opening-closing direction of the mold apparatus. In other words, in the present embodiment, upon completion of the charging of the molten resin 42 in the predetermined amount, at least a portion of the side wall portion is not charged with the molten resin 42.

As shown in FIG. 6, since the volume of the bottom portion is relatively large, the molten resin 42 is present mainly in the bottom portion of the cavity 37, the bottom portion being sandwiched between the mold core 12 and the gate block 16. The time during which the mold closing step is halted is very short. Accordingly, while the mold closing step is halted, the molten resin 42 does not leak out to the outside through the clearance between the parting face of the stripper plate 14 and the parting plate of the cavity template 15. Desirably, in order to shorten, to the greatest possible extent, the time during which the mold closing step is halted, the charging speed for the molten resin 42 is increased to the greatest possible extent. Notably, a halt to the mold closing step may be eliminated. This shortens the molding time of one shot, so that the throughput of the molding machine can be enhanced.

The resin flow path 28 of the present embodiment has the heating unit 43 attached therearound and thus serves as a hot runner. Accordingly, difficulty is involved in evenly distributing the molten resin 42 among a plurality of the cavities 37 so as to be evenly charged thereinto. As shown in FIG. 7, difference arises between the quantity of the molten resin 42 to be charged into the cavity 37 in a region A and the quantity of the molten resin 42 to be charged into the cavity 37 in a region B. In the example shown in FIG. 7, the quantity of the molten resin 42 to be charged into the cavity 37 in the region B is less than the quantity of the molten resin 42 to be charged into the cavity 37 in the region A. In order to cope with the problem, in the present embodiment, the quantity of the molten resin 42 to be ejected from the heating cylinder 31 in a single injection step is adjusted so as to charge a sufficient quantity of the molten resin 42 into the cavity 37 which would otherwise be charged with a least amount of the molten resin 42; i.e., into the cavity 37 in the region B. This prevents a shortage of the molten resin 42 in the cavity 37 in the region B. Meanwhile, the cavity 37 other than the cavity 37 which is charged with a least amount of the molten resin 42; i.e., the cavity 37 in the region A, is excessively charged with the molten resin 42. As a result, in the cavity 37 in the region A, a portion of the molten resin 42 becomes surplus. In FIG. 7, reference numeral 47 denotes a mounting member for mounting the mold core 12 to a mold-mounting surface of the movable platen 21.

Subsequently, the hydraulic cylinder apparatus 11 resumes driving, causing the movable mold 23 to advance toward the stationary mold 24 to thereby resume the mold closing step. The charging of the molten resin 42 may be continued in the course of the resumed mold closing step. The resumed mold closing step is a compression step for compressing the molten resin 42. Thus, even in the case where the charging speed for the molten resin 42 cannot be increased, this can shorten the molding time of one shot, so that the throughput of the molding machine can be enhanced.

Performing mold closing narrows the cavity 37. As a result, the molten resin 42 which is present mainly in the bottom portion of the cavity 37, the bottom portion being sandwiched between the mold core 12 and the gate block 16, is pressurized and moves leftward in FIG. 7 within the cavity 37, thereby filling even a portion of the cavity 37 located distant from the gate hole 39 of the side wall portion. Thus, the molten resin 42 fills the entire cavity 37. In this case, as a result of mold closing, the projecting portion of the insert ring 17 is fitted into the insert-ring-receiving groove 18 formed on the parting face of the stripper plate 14. Thus, the molten resin 42 is blocked off by the insert ring 17 and therefore does not leak out through the clearance between the parting faces of the movable mold 23 and the stationary mold 24.

Subsequently, as shown in FIG. 8, even after completion of mold closing, the hydraulic cylinder apparatus 11 presses the movable mold 23 against the stationary mold 24, thereby performing mold clamping. In the mold clamping step, the pressurized air supplied from the pressurized-fluid source 81 shown in FIG. 1 is supplied to the counter-gate-pin-side pressure chamber 73b of the pneumatic cylinder unit 73 via the counter-gate-pin-side pipe line 74b. Accordingly, the piston 72 is moved leftward in FIG. 1, so that the tip end of the valve gate pin 38 is advanced into the gate hole 39 formed in the gate block 16. Thus, the gate hole 39 is closed by the valve gate pin 38. In this manner, in the mold clamping step, since the molten resin 42 is compressed, not only does the molten resin 42 reach the entire region of the cavity 37, but also the internal pressure distribution becomes uniform, thereby improving the molecular orientation of the resin, enhancing the performance of transfer from the surface of the mold, preventing sinkage of the resin, reducing residual stress, and preventing deformation.

In the cavity 37 which is charged with the molten resin 42 in a quantity greater than a required quantity, such as the cavity 37 in the region A shown in FIG. 7, if the gate hole 39 is held closed by the valve gate pin 38, the pressure of the molten resin 42 contained in the cavity 37 will increase more than required. Although the projecting portion of the insert ring 17 is fitted into the insert-ring-receiving groove 18 formed on the parting face of the stripper plate 14, the molten resin 42 having an excessively high pressure potentially leaks out through the clearance between the parting faces of the movable mold 23 and the stationary mold 24. Also, component members of the mold apparatus potentially break.

However, in the present embodiment, as mentioned previously, the relief valve 77b is connected to the counter-gate-pin-side pipe line 74b and opens when the internal pressure of the counter-gate-pin-side pressure chamber 73b becomes a predetermined relief value or higher. The pressure of the molten resin 42 contained in the cavity 37 applies, to the tip end of the valve gate pin 38, a force which presses the valve gate pin 38 toward the pneumatic cylinder unit 73; i.e., a force which presses and contracts the counter-gate-pin-side pressure chamber 73b. Accordingly, when the pressure of the molten resin 42 contained in the cavity 37 becomes a predetermined allowable value or higher, the internal pressure of the counter-gate-pin-side pressure chamber 73b becomes the predetermined relief value or higher, so that the relief valve 77b is opened. As a result, the pressurized air contained in the counter-gate-pin-side pressure chamber 73b outflows as indicated by the arrow D in FIG. 9, and thus the piston 72 moves rightward in FIG. 9. The gate hole 39 is opened. Thus, as indicated by the arrow C in FIG. 9, the molten resin 42 leaks out into the resin flow path 28 from the cavity 37. Therefore, the pressure of the molten resin 42 contained in the cavity 37 drops. When the pressure of the molten resin 42 contained in the cavity 37 drops below a predetermined allowable value, a force which presses the valve gate pin 38 toward the gate hole 39 overcomes the pressure of the molten resin 42. Thus, the tip end of the valve gate pin 38 again closes the gate hole 39.

As described above, since the valve gate pin 38 has a function for maintaining the pressure of the molten resin 42 contained in the cavity 37 below a predetermined allowable value, the pressure of the molten resin 42 does not become excessively high; thus, the molten resin 42 does not leak out through the clearance between the parting faces of the movable mold 23 and the stationary mold 24, and component members of the mold apparatus do not break. Excess molten resin 42 in the cavity 37 in the region A is pressed back into the resin flow path 28 and flows back toward the heating cylinder 31. In this case, so-called suck back may be performed by slightly retreating the screw 33 in the heating cylinder 31.

Control of the valve gate pins 38 will be described. First, the molten resin 42 is charged into the cavities 37, and the quantities of the molten resin 42 to be charged into the cavities 37 are checked. Specifically, the valve gate pins 38 in a closing condition are moved at mutually equivalent moving speeds so as to be brought into an opening condition, thereby starting the charging of the molten resin 42. Upon completion of charging, the valve gate pins 38 are moved at mutually equivalent moving speeds so as to be brought into the closing condition.

The moving speed of the valve gate pin 38 associated with the cavity 37 which is charged with a small quantity of the molten resin 42 is set so as to become high at the time of start of charging. This increases the moving speed of the valve gate pin 38 at the time of start of charging, thereby increasing the quantity of the molten resin 42 to be charged into the cavity 37. By contrast, the moving speed of the valve gate pin 38 associated with the cavity 37 which is charged with a large quantity of the molten resin 42 is set so as to become low at the time of start of charging. This decreases the moving speed of the valve gate pin 38 at the time of start of charging, thereby decreasing the quantity of the molten resin 42 to be charged into the cavity 37.

When, at the time of completion of charging, the valve gate pins 38 are to be brought into a closing condition, the movement of the valve gate pin 38 associated with the cavity 37 which is charged with a small quantity of the molten resin 42 is started later than the movement of the valve gate pin 38 associated with the cavity 37 which is charged with a large quantity of the molten resin 42. This delays the time when the movement of the valve gate pin 38 is started at the time of completion of charging, thereby increasing the quantity of the molten resin 42 to be charged into the cavity 37. By contrast, the movement of the valve gate pin 38 associated with the cavity 37 which is charged with a large quantity of the molten resin 42 is started earlier than the movement of the valve gate pin 38 associated with the cavity 37 which is charged with a small quantity of the molten resin 42. This advances the time when the movement of the valve gate pin 38 is started at the time of completion of charging, thereby decreasing the quantity of the molten resin 42 to be charged into the cavity 37. Alternatively, the moving speed of the valve gate pin 38 associated with the cavity 37 which is charged with a small quantity of the molten resin 42 is set low. This decreases the moving speed of the valve gate pin 38 at the time of completion of charging, thereby increasing the quantity of the molten resin 42 to be charged into the cavity 37. By contrast, the moving speed of the valve gate pin 38 associated with the cavity 37 which is charged with a large quantity of the molten resin 42 is set high. This increases the moving speed of the valve gate pin 38 at the time of completion of charging, thereby decreasing the quantity of the molten resin 42 to be charged into the cavity 37.

In the mold closing step, a working pressure for the valve gate pin 38 associated with the cavity 37 which is charged with a small quantity of the molten resin 42 is set high. This increases a force which works against outflow, toward the gate side, of the molten resin 42 contained in the cavity 37. By contrast, a working pressure for the valve gate pin 38 associated with the cavity 37 which is charged with a large quantity of the molten resin 42 is set low. This decreases a force which works against outflow, toward the gate side, of the molten resin 42 contained in the cavity 37.

As mentioned previously, the speed control valves 88a and 88b are used to control the moving speed of the valve gate pin 38, and the relief valves 77a and 77b are used to control the working pressure for the valve gate pin 38. The valve gate pins 38 for the cavities 37 undergo mutually independent control of moving speed and mutually independent control of working pressure.

Next will be described the flow of the molten resin 42 within the side wall portion inclined in relation to the opening-closing direction of the mold apparatus in the mold closing step in which the movable mold 23 advances toward the stationary mold 24. FIG. 10(a) shows a view similar to that of FIG. 8. FIG. 10(b) shows, on an enlarged scale, a portion of the side wall portion encircled by circle E of FIG. 10(a). In the mold closing step, since the movable mold 23 approaches the stationary mold 24, the surface of the mold core 12 and the surface of the cavity template 15 undergo relative approach to each other.

In this case, in an initial stage of the mold closing step, the surface of the mold core 12 is located at a position denoted by reference numeral 12a-1. The surface of the cavity template 15 is located at a position denoted by reference numeral 15a. The angle of inclination of the side wall portion in relation to the opening-closing direction of the mold apparatus is θ. Until completion of the mold closing step, the surface of the mold core 12 moves up to a position denoted by reference numeral 12a-2. This indicates that the clearance between the surface of the mold core 12 and the surface of the cavity template 15 in the initial stage of the mold closing step is ΔT greater than a clearance T between the surface of the mold core 12 and the surface of the cavity template 15 at the time of completion of the mold closing step. ΔT is the product of a mold-closing stroke L and sin θ. For example, in the case where θ is 4 degrees, ΔT is 0.2 mm at an L of 3 mm; ΔT is 0.4 mm at an L of 6 mm; ΔT is 0.7 mm at an L of 10 mm; and ΔT is 1 mm at an L of 15 mm.

In the present embodiment, as mentioned previously, charging the resin into the cavity 37 in a predetermined amount is completed before the mold closing step is completed. This indicates that the molten resin 42 flows at the time when the clearance between the surface of the mold core 12 and the surface of the cavity template 15 as measured at the side wall portion is ΔT greater than the clearance T as measured upon completion of the mold closing step. Therefore, in the case where the side wall portion is inclined in relation to the opening-closing direction of the mold apparatus, even though the clearance between the surface of the mold core 12 and the surface of the cavity template 15 as measured at the side wall portion is narrow, the molten resin 42 flows smoothly and fills the entire side wall portion, since the molten resin 42 flows at the time when the clearance is large. Accordingly, even though, as shown in FIG. 6, a portion of the side wall portion located distant from the gate hole 39 is not charged with the molten resin 42 at the time when charging the resin into the cavity 37 in a predetermined amount is completed, the portion of the side wall portion located distant from the gate hole 39 is also charged with the molten resin 42 as shown in FIG. 8 at the end of the mold closing step.

As described above, since the side wall portion is inclined in relation to the opening-closing direction of the mold apparatus, a wedge effect is yielded, so that the molten resin 42 spreads throughout the cavity 37. Thus, the internal pressure distribution becomes uniform, thereby improving the molecular orientation of the resin, enhancing optical properties of the resin, enhancing the performance of transfer from the surface of the mold, reducing occurrence of weld lines, preventing sinkage of the resin, reducing residual stress, and preventing deformation.

Subsequently, the molten resin 42 is cooled to a certain extent and solidified. When the molded product 41 is produced, mold opening is performed. As shown in FIG. 11, the movable mold 23 and the stationary mold 24 open apart from each other. Notably, immediately before mold opening is performed, a pressurized fluid is supplied into the cavity 37 through the ventilation flow path 36.

Subsequently, the molded product 41 is ejected. As shown in FIG. 11, when the molded product 41 adheres to the outer surface of the mold core 12, the stripper plate 14 is advanced in relation to the mold core 12, and a pressurized fluid is supplied into the cavity 37 through the ejection flow path 35. By this procedure, as shown in FIG. 12, the molded product 41 separates from the mold core 12 and drops. In the case where dropping potentially damages the molded product 41, the molded product 41 can be detached from the mold core 12 by use of an unillustrated molded-product-unloading machine, instead of being dropped.

As shown in FIG. 13, when the molded product 41 adheres to the inner surface of the cavity template 15 and that of the gate block 16, the pressurized fluid is supplied into the cavity 37 through the ventilation flow path 36. By this procedure, the molded product 41 separates from the inner surface of the cavity template 15 and that of the gate block 16 and drops. Alternatively, the molded product 41 can be detached from the inner surface of the cavity template 15 and that of the gate block 16 by use of an unillustrated molded-product-unloading machine, instead of being dropped.

As described above, in the present embodiment, the valve gate pins 38 undergo mutually independent control with respect to an operation of opening/closing the gate holes 39 for a plurality of the cavities 37. Thus, in the multicavity mold apparatus, the pressures of the molten resin 42 contained in the cavities 37 are controlled to respectively appropriate values, thereby controlling the quantities of the molten resin 42 contained in the cavities 37 to respectively appropriate values. In other words, a plurality of the cavities 37 are evenly charged with the molten resin 42. Thus, none of the cavities 37 is accompanied by occurrence of burrs caused by leakage of the molten resin 42 and short shot caused by shortage of the molten resin 42. Therefore, a plurality of the molded products 41 exhibiting high quality can be produced uniformly and simultaneously in a one-shot molding process.

In the present embodiment, a molded product can have a high L/T ratio, where L is the length of flow of the resin as measured from a gate, and T is the wall thickness of the molded product.

Next, a second embodiment of the present invention will be described. Structural elements similar to those of the first embodiment are denoted by like reference numerals, and repeated description thereof is omitted. Also, repeated description of operations and effects similar to those of the first embodiment is also omitted.

The present embodiment will be described while mentioning the case where the cavities 37 are used to produce respective molded products having different shapes. Herein, a first molded product and a second molded product, which are combined into an assembly, are simultaneously produced in a one-shot molding process.

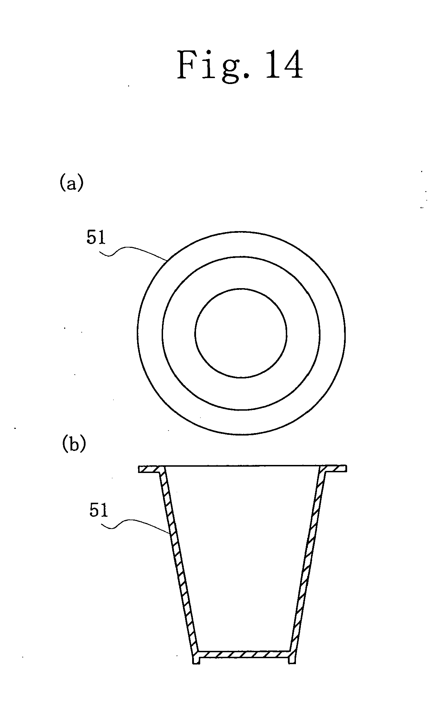

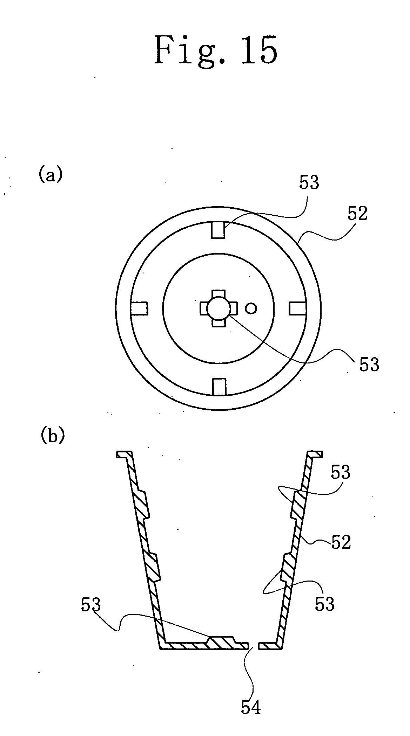

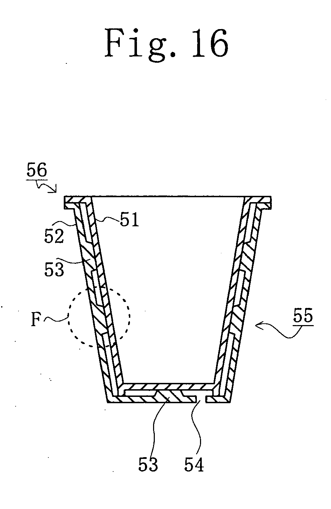

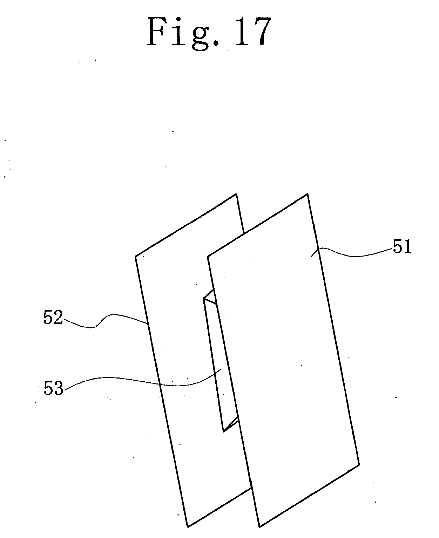

FIG. 14 is a couple of views showing a first molded product according to a second embodiment of the present invention; FIG. 15 is a couple of views showing a second molded product according to the second embodiment of the present invention; FIG. 16 is a sectional view of an assembly of the first and second molded products according to the second embodiment of the present invention; and FIG. 17 is an enlarged view showing an essential portion F of the assembly of the first and second molded products according to the second embodiment of the present invention.

In the present embodiment, one cavity 37 is used to form a first molded product 51 having a shape resembling that of a three-dimensional, deep-bottomed, concave container having a thin side wall as shown in the front view of FIG. 14(a) and the sectional view of FIG. 14(b). The other cavity 37 is used to form a second molded product 52 having a shape resembling that of a three-dimensional, deep-bottomed, concave container having a thin side wall as shown in the front view of FIG. 15(a) and the sectional view of FIG. 15(b). The second molded product 52 has ribs 53, which are projections projecting from the inner surface thereof. The shape, dimensions, position, number, and the like of the ribs 53 can be selected as appropriate. Desirably, for example, as shown in FIGS. 15(a) and 15(b), the ribs 53 are integrally formed on the inner surface of a side wall and on the inner surface of a bottom wall. A through hole 54 functioning as an air vent can be formed in a portion of the side wall or the bottom wall.

The first molded product 51 and the second molded product 52 are combined, whereby an assembly 55 as shown in FIG. 16 can be obtained. In this case, the first molded product 51 is inserted into the second molded product 52, thereby yielding the assembly 55 having a shape resembling that of a deep-bottomed, concave container whose side wall and bottom wall are of a duplex structure. As shown in FIG. 17, which is an enlarged view of the essential portion F shown in FIG. 16, the ribs 53 projecting from the inner surfaces of the side and bottom walls of the second molded product 52 abut the outer surfaces of the side and bottom walls of the first molded product 51, thereby forming a space between the outer surfaces of the side and bottom walls of the first molded product 51 and the inner surfaces of the side and bottom walls of the second molded product 52.

The assembly 55 has a joint portion 56 for joining the first molded product 51 and the second molded product 52 together. In the example shown in FIG. 16, the joint portion 56 is formed by fusing together flange portions formed in contact with each other around the openings of the first and second molded products 51 and 52. The joint portion 56 may be formed at any location where the first and second molded products 51 and 52 contact each other. For example, the joint portion 56 may be formed by fusing the rib 53 of the second molded product 52 to the outer surface of the first molded product 51. Further, a joining means for forming the joint portion 56 may be other than fusing. For example, bonding by use of an adhesive may be employed.

The assembly 55 of the present embodiment is suited for use as a container, a cup, or the like for containing food. Since the space formed between the outer surfaces of the side and bottom walls of the first molded product 51 and the inner surfaces of the side and bottom walls of the second molded product 52 functions as a heat-insulating barrier, a contained food of either a high temperature or a low temperature can be held at the high temperature or the low temperature for long hours. Also, when the assembly 55 is held in a hand, the heat or the cold of a contained food is not transmitted to the hand, thereby preventing occurrence of a burn or chilblains. Further, since the side and bottom walls of the assembly 55 are of a duplex structure, even when either the first molded product 51 or the second molded product 52 is damaged, the contents of the assembly 55 do not leak out to the exterior of the assembly 55.

Further, different molding materials may be used to form the first molded product 51 and the second molded product 52. For example, the first molded product 51 is formed from a molding material whose transmissivity is low to thereby have gas barrier properties, such as ethylene-vinylalcohol copolymer (EVOH), and the second molded product 52 is formed from another molding material, whereby the assembly 55 which serves as a container, a cup, or the like having gas barrier properties can be obtained. In this case, the assembly 55 having gas barrier properties can be obtained by using a molding material having gas barrier properties, which is relatively expensive, only to form the first molded product 51, so that a container, a cup, or the like capable of maintaining the quality of a contained food or the like can be inexpensively fabricated. Also, the assembly 55 which serves as a container having high strength and high weatherability can be obtained by forming the second molded product 52 from a molding material having high strength and high weatherability and forming the first molded product 51 from another molding material. In this case, the assembly 55 having high strength and high weatherability can be obtained by using a molding material having high strength and high weatherability, which is relatively expensive, only to form the second molded product 52, so that a container capable of storing oil, grease, paint, or the like outdoors over a long period of time can be inexpensively fabricated.

Next, a third embodiment of the present invention will be described. Structural elements similar to those of the first and second embodiments are denoted by like reference numerals, and repeated description thereof is omitted. Also, repeated description of operations and effects similar to those of the first and second embodiments is also omitted.

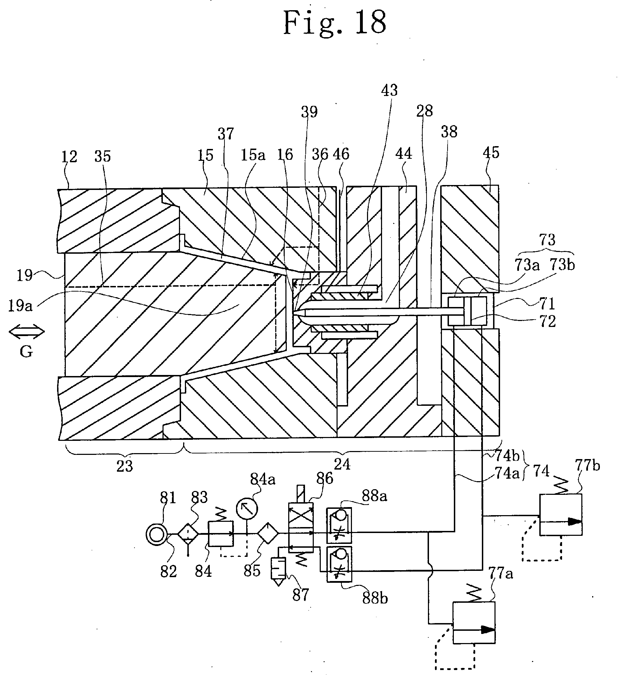

FIG. 18 is a sectional view showing the peripheral configuration of one cavity of a mold apparatus according to a third embodiment of the present invention.

In FIG. 18, reference numeral 19 denotes a plunger which is attached to the mold core 12 of the movable mold 23 in a manner capable of advancing and retreating. The plunger 19 includes a projecting portion 19a used to form the inner surface of a side wall and an inner bottom surface of the deep-bottomed, concave molded product 41. As shown in FIG. 18, in a mold-closed condition, the mold core 12, the plunger 19, the cavity template 15, and the gate block 16 define the cavity 37 having a shape of the molded product 41. An unillustrated drive apparatus moves the plunger 19 in the directions indicated by an arrow G; i.e., the drive apparatus advances and retreats the plunger 19. In the present embodiment, the stripper plate 14 is not attached to the mold core 12. Other structural features are similar to those of the first embodiment, and repeated description thereof is omitted.

In the present embodiment, before the molten resin 42 is charged into the cavity 37, the plunger 19 is moved leftward in FIG. 18 for retreat. While the plunger 19 is retreated, the charging of the molten resin 42 into the cavity 37 is started. Then, a mold clamping step is performed, and the plunger 19 is moved rightward for advancement in FIG. 18. This causes the molten resin 42 contained in the cavity 37 to be compressed, and excess molten resin 42 is pressed back into the resin flow path 28 through the opened gate hole 39. Other operational features are similar to those of the first embodiment, and repeated description thereof is omitted.

As described above, the present embodiment is configured such that the plungers 19 are caused to advance for a plurality of the corresponding cavities 37. Thus, in the multicavity mold apparatus, the pressures of the molten resin 42 contained in the cavities 37 are controlled to respectively appropriate values, thereby controlling the quantities of the molten resin 42 contained in the cavities 37 to respectively appropriate values. Accordingly, none of the cavities 37 is accompanied by occurrence of burrs caused by leakage of the molten resin 42 and short shot caused by shortage of the molten resin 42. Therefore, a plurality of the molded products 41 exhibiting high quality can be produced uniformly and simultaneously in a one-shot molding process.

The first to third embodiments are described while mentioning a hydraulic mold-clamping apparatus. However, a motor-driven mold-clamping apparatus is preferred. The above embodiments are also described while mentioning a horizontal injection molding machine, in which the movable platen moves laterally (horizontally). However, the molding method, the mold for molding, the molded product, and the molding machine of the present invention can also be applied to a vertical injection molding machine, in which the movable platen moves longitudinally (vertically). Further, the molding method, the mold for molding, the molded product, and the molding machine of the present invention can be applied not only to injection molding machines but also to other molding machines, such as die casting machines and IJ sealing presses.

The present invention is not limited to the above-described embodiments. Numerous modifications and variations of the present invention are possible in light of the spirit of the present invention, and they are not excluded from the scope of the present invention.

### INDUSTRIAL APPLICABILITY

The present invention can be applied to a molding method, a mold for molding, a molded product, and a molding machine.

## Claims

1. A molding method **characterized by** comprising:
(a) starting, before completion of a mold closing step of a mold apparatus, charging of a molding material into a plurality of cavities of the mold apparatus;
(b) completing, before completion of the mold closing step, charging of the molding material; and
(c) performing, after completion of the mold closing step, a mold clamping step of the mold apparatus, wherein
(d) molded products are produced while quantities of the molding material charged in the cavities are controlled.

2. A molding method **characterized by** comprising:
(a) starting charging of a molding material into a plurality of cavities of a mold apparatus in a state in which plungers, which advance into and retreat from the corresponding cavities, are located at respective retreated positions;
(b) completing, before completion of a mold closing step, charging of the molding material;
(c) performing, after completion of the mold closing step, a mold clamping step of the mold apparatus; and
(d) advancing the plungers into the corresponding cavities so as to produce molded products while quantities of the molding material charged in the cavities are controlled.

3. A molding method according to claim 1 or 2, wherein the quantities of the molding material charged in the cavities are controlled by means of gate pins for closing gate holes of the corresponding cavities.

4. A molding method according to claim 3, wherein the gate pins undergo mutually independent pressure control or mutually independent speed control.

5. A mold for molding **characterized by** comprising:
(a) a stationary mold having a parting face;
(b) a movable mold having a parting face to be pressed, in a close contact condition, against the parting face of the stationary mold, and advancing toward the stationary mold; (c) a plurality of cavities formed between the stationary mold and the movable mold;
(d) insert rings each having a base portion and a projecting portion, the base portions being fixed to either of the parting faces around the corresponding cavities;
(e) annular grooves formed on the other parting face around the corresponding cavities and adapted to receive the projecting portions of the corresponding insert rings;
(f) gate pins for closing gate holes of the corresponding cavities; and
(g) a drive apparatus for controlling operations of the gate pins in a mutually independent manner so as to control quantities of a molding material charged in the cavities.

6. A mold for molding according to claim 5, wherein the drive apparatus controls operations of the gate pins in a mutually independent manner such that a pressure of the molding material charged in each cavity becomes less than a predetermined value.

7. A mold for molding according to claim 5 or 6, wherein each of the gate holes establishes communication between the corresponding cavity and a molding-material flow path equipped with a heating unit.

8. A molded product produced by a molding method according to any one of claims 1 to 4.

9. A molded product according to claim 8, wherein the molded product is a set of molded products different in shape and capable of being mutually combined.

10. A molding machine **characterized in that**:
(a) the molding machine is adapted to produce a molded product by use of a mold apparatus;
(b) the mold apparatus comprises a stationary mold having a parting face;
(c) a movable mold having a parting face to be pressed, in a close contact condition, against the parting face of the stationary mold, and advancing toward the stationary mold; (d) a plurality of cavities formed between the stationary mold and the movable mold;
(e) insert rings each having a base portion and a projecting portion, the base portions being fixed to either of the parting faces around the corresponding cavities;
(f) annular grooves formed on the other parting face around the corresponding cavities and adapted to receive the projecting portions of the corresponding insert rings;
(g) gate pins for closing gate holes of the corresponding cavities; and
(h) a drive apparatus for controlling operations of the gate pins in a mutually independent manner so as to control quantities of a molding material charged in the cavities.

11. A molding machine according to claim 10, wherein the gate pins undergo mutually independent pressure control or mutually independent speed control.
